# EUROPEAN PATENT SPECIFICATION

(11) **EP 0 940 051 B1**
(45) Date of publication and mention of the grant of the patent: **29.08.2007**
(21) Application number: 98923040.4
(22) Date of filing: 01.06.1998
(51) Int. Cl.: H04Q 7/20, H04K 3/00, H04Q 7/38

(54) **CELLULAR COMMUNICATIONS FIREWALL**
FIREWALL FÜR ZELLULARE KOMMUNIKATION
PARE-FEU POUR COMMUNICATIONS CELLULAIRES

(30) Priority: 02.06.1997 US 48243 P; 25.11.1997 US 977605
(43) Date of publication of application: 08.09.1999
(73) Proprietor: Netline Communications Technologies (NCT) Ltd., 52333 Ramat-gan (IL)
(72) Inventor: ISRAELI, Gil, 99797 Karme-Yosef (IL); TE-ENI, Ben, G., 69086 Tel-Aviv (IL); YARDEN-ZASLAVSKY, Ofer, 42855 Moshav Olesh (IL)
(74) Representative: van Westenbrugge, Andries
(86) International application number: PCT/IL1998/000253
(87) International publication number: WO 1998/056192

(56) References cited:
- EP-A- 0 546 849
- EP-A- 0 568 824
- EP-A- 0 856 999
- US-A- 5 295 180
- US-A- 5 428 667
- US-A- 5 428 668
- US-A- 5 596 570
- PROUDLER G: "AUTOMATICALLY DISABLING MOBILE COMMUNICATIONS DEVICES IN SENSITIVE LOCATIONS" RESEARCH DISCLOSURE, KENNETH MASON PUBLICATIONS, HAMPSHIRE, GB, no. 391, 1 November 1996 (1996-11-01), page 729 XP000680926 ISSN: 0374-4353

## Description

### FIELD OF THE INVENTION

The present invention relates to a method and system for regulation of mobile cellular telephones usage within defined areas, such as conference rooms, concert halls, cinemas etc.

### BACKGROUND OF THE INVENTION

As more subscribers use mobile cellular phones and carry them everywhere, even in places such as concert halls, cinemas, synagogues, churches etc., there is a need for a system that will prevent such mobile phones from ringing and disturbing other people nearby (see S. Teitelbaum "Cellular Obsession", Wired Magazine, Wired Ventures Inc., vol. 5, No. 1, Jan 97, pp. 144-149, 194-196).

Certain cellular telephones incorporate features that minimize the nuisance and yet enable subscribers to notice that a call is being received. One method involves the use of a vibrating mechanism, which replaces the noisy ring (see U.S. Pat. No. 5,404,391). When in vibrating mode, once a call is received, the subscriber feels the vibration of the cellular phone and thus may leave the place and talk without disturbing everybody. The main problem is that only a small percentage of the cellular phones on the market include such a vibrating feature and that even user's who own cellular phones that include this feature may forget, or intentionally refrain from, switching the telephone into vibrating mode.

Furthermore, use of cellular telephones may cause more than acoustic nuisance. According to recent medical research, use of cellular telephones may interfere with the normal operation of heart pacemakers and other medical equipment (see Journal of Medical Engineering & Technology, "**Interference to medical equipment from mobile phones**" 21(3-4):141-6, 1997 May-Aug). Similarly, enforcement of cellular telephone usage policy may be advantageous in proximity to avionic equipment (see U.S. Pat. No. 5,670,742), and other RFI susceptible equipment.

In addition, certain authorities may be interested in preventing cellular subscribers from initiating calls. Such may be the case in military bases where prevention of cellular phone usage is necessary due to security considerations. Currently, various security authorities have recognized an operational need to prevent accidental initiation of calls in maximum security zones so as to prevent accidental transmission of sensitive information over such an insecure channel, regularly monitored by foreign intelligence agencies.

In a typical cellular telephone network each cell site has a base station with a computerized transceiver and an antenna. This radio equipment provides coverage for an area that is usually from two to ten miles in radius. Even smaller cell sites cover tunnels, subways and specific roadways. The amount of area depends on topography, population, and traffic. The mobile telecommunication switching office (MTSO) decides which cell and which frequencies in that cell will be used.

The subscribers communicate with the system when they are within the coverage area of the base stations located in the radio cells. In a typical cellular telephone system, a subscriber station, such as a mobile phone, located in a radio cell tunes the receiver unit of its radio to a signaling channel of a base station located in the radio cell. A signaling channel is used for exchanging messages between the mobile phone and the cellular network, including messages concerning establishment of a connection between a subscriber station and a base station. On the basis of connection establishment, the system controller of the cellular radio network assigns the subscriber stations to actual traffic channels, in which the actual transfer of information, i.e. speech or data, takes place.

Various cellular systems are used worldwide, and communications are carried out in accordance with industry established air interface standards. Following are some standards commonly used in various territories throughout the world and well known to those skilled in the art:
(a) AMPS (Advanced Mobile Phone Service) - an analog system based on FDMA (Frequency Division Multiple Access) as defined in EIA/TIA 533 standard;
(b) D-AMPS (Digital AMPS) - a digital system based on TDMA (Time Division Multiple Access) as defined in IS-54 and IS-136 standards;
(c) GSM (Global System for Mobiles) - a digital system based on TDMA as defined by the European Telecommunications Standards Institute (ETSI) technical specifications;
(d) CDMA (Code Division Multiple Access) - a digital system based on spread spectrum radio communications as defined in IS-95 standard.

The above methods for cellular communications and further systems vary in frequency range, modulation, signal processing, data compression, bandwidth allocation, number of channels and other characteristics.

In a typical cellular system, mobile units communicate with cellular base stations by using two types of channels: control/access channels and voice/data channels. Control channels transfer signaling messages between the base stations and the mobile units, so as to enable paging, call establishment/termination and traffic management. Voice channels carry the actual conversation between the cellular subscriber and the other end of the call.

Since cellular systems rely on wireless communication links, it is required that both control and voice channels maintain a sufficient signal-to-noise (S/N) ratio to enable a reasonable quality of service. In the event that the control channel S/N ratio falls below a minimum level, the mobile unit cannot communicate with the base station and therefore scans other control channels to remain in contact with the cellular system. If no other control channel with a sufficient S/N ratio is detected, the mobile unit cannot contact or be contacted by the cellular system and indicates *No Service.*

There are two main methods for significantly decreasing the S/N ratio of a wireless RF link: physical isolation and jamming.

The first method involves a contiguous conductive shield, well known as a "Faraday cage", which blocks electromagnetic radiation by reflecting, absorbing and dissipating radio frequency signals.

For example, U.S. Pat. No. 5,670,742 was issued on Sep. 23, 1997 to Jones, Scott A for "EMI PROTECTED AIRCRAFT". This device relates to shielding for an aircraft, which protects the aircraft's avionics and other electronic equipment from electromagnetic interference generated by electronic devices in use aboard the aircraft. Such shielding protects from electromagnetic interference (EMI) which might affect an aircraft's avionics and other electronic equipment with potentially disastrous results if the interference occurs at an inopportune time during a flight, such as take-off or landing. This device requires physical modifications to an aircraft, and therefore involves an expensive and time consuming upgrade for each aircraft. Employing similar techniques for other applications may he inefficient and costly.

Radio jamming is a method commonly used for military electronic warfare. Basic jamming devices generate and transmit spot or barrage noise. When applied on the target receiver(s), such jamming signals may significantly reduce the S/N ratio, thereby interfering the communications on the target radio link. Jamming devices consist essentially of a noise source, a modulator and a transmitter. A basic jamming device is disclosed in U.S. Patent No. 3,942,179 issued on Mar. 2, 1976 to Dorn for "FILTERED-NOISE JAMMER". Jammers used for military purposes normally employ powerful transmitters for the purpose of impairing message transmission by the enemy over as large an operation range as possible. Use of plain broadband noise jamming may have several disadvantages, as follows: (a) high transmission power; (b) difficulty to precisely control a predefined jamming area; (c) interference with low powered signals from remote cell sites.

EP patent publication 0 856 999 (Linz), published after the filing date of the present application, describes a method of generating an artificially generated noise power which interferes with synchronizing information of a base station.
EP patent publication 0 546 849 (Nippon Electric Co.), describes a radio communication system including noise sources used to control the coverage areas of base stations.

### SUMMARY OF INVENTION

According to one broad aspect of the present invention, a cellular telephony usage control system comprises at least one jammer unit that controls the use of cellular telephones within a geographical area covered by at least one cellular communications system. Continuous transmission of a jamming signal on all control frequencies may result in inaccurate coverage of jamming, and may negatively effect the performance of the cellular system.

Accordingly, it is a principal object of the present invention to provide a method and device for achieving reliable and accurate prevention of cellular telephone calls, within a given area.
In accordance with a preferred embodiment of the present invention, there is provided a method for prevention of cellular telephone calls in a communication system within a given area, said method comprising the steps of: determining at least one control channel frequency existing within the area for establishing cellular telephone calls, said control frequency containing information transmitted thereon, said information being transmitted as coded signals and commands; and generating a signal which interferes with said control frequency by preventing decoding of said signals and commands, said signal preventing generation of handshake signals in the system, to prevent establishment of a cellular phone call. In the preferred embodiment, the device and method operate to block the control frequencies of the cellular system within a given area. The device transmits a blocking signal with a low power output, which interferes with the ability to receive and decode signals and commands broadcast at the control frequency. Thus, the handshake routine of the mobile with a local cellular base station is prevented. Operation of the device is achieved in several ways, manually, automatically, and/or by remote control. Its operation prevents cellular communication ability by subscribers within the area or within the effective blocking range, which is derived from the effective radiated power (ERP) of the blocking signal, its type and the type of communications/ or blocked system. Using the inventive device, a given area normally accessible by cellular communications is blocked from such access, thus providing a security-related, cultural or other safeguard. The given area is thereby isolated from cellular communications, and access can only be achieved by physically relocating the user whose cellular telephone has been blocked. Other features and advantages of the invention will become apparent from the following drawings and description.

### OBJECTS AND ADVANTAGES

Accordingly it is an object of the invention to provide a method for preventing a cellular phone from being able to receive calls when located within a hall, by transmitting a low power RF signal.

A further object is to provide a method for preventing cellular telephone calls within defined areas without transmitting a continuos signal.

A further object is to provide a method for preventing cellular telephone calls within defined areas without interfering with normal cellular communication outside said hall.

Yet another object of the present invention is to provide a method for enabling certain high priority subscribers to receive, initiate and conduct calls when located within the hall, despite the blocking of all other subscribers.

Further objects of the invention will become apparent from the description of the invention which follows.

### BRIEF DESCRIPTION OF THE DRAWINGS

FIG. 1 is an illustrative diagram describing a typical cellular system composed of 7 cell sites, each having a base station incorporating a transceiver.
FIG. 2 is a functional block diagram of a typical regulated area within the cellular system coverage area, controlled by the present invention.
FIG. 3 is an electronic block diagram of a basic jamming device in accordance with the present invention.
FIG. 4 is a schematic block diagram of an improved embodiment of the present invention where jamming is triggered by mobile unit transmission.
FIG. 5 is a block diagram of an electronic device for scanning a plurality of control channels so as to determine the received signal strength of each channel.
FIG. 6 is a block diagram of a frequency hopping spread spectrum transmitter.
FIG. 7 illustrates a jamming system having a sensor device located outside the regulated area to improve accuracy.
FIG. 8 illustrates a non-continuously transmitting jamming device.

### DETAILED DESCRIPTION OF THE INVENTION

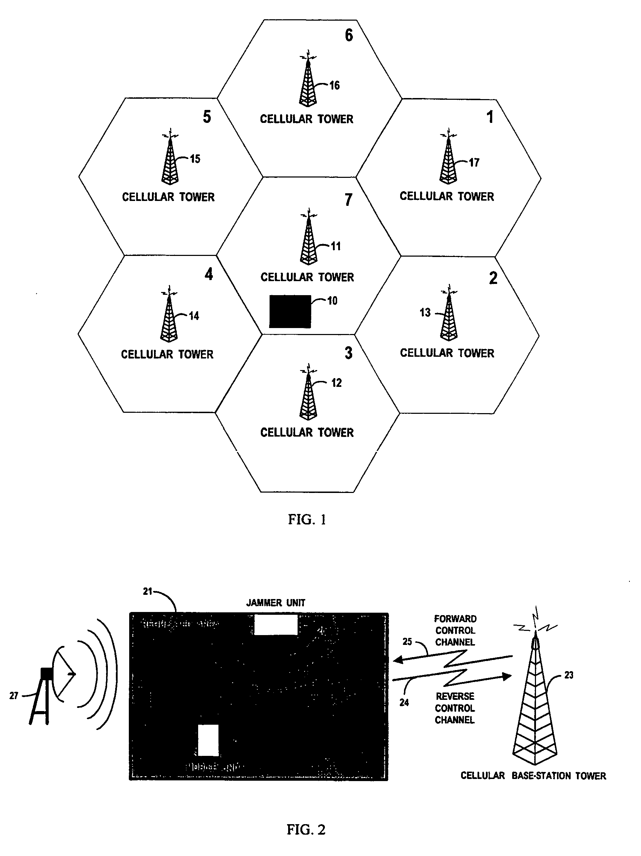

FIG. 1 illustrates a basic cellular system having 7 hexagonal cells numbered 1-7. Cell 7 is shown in the center, surrounded by adjacent cells 1-6. The serving area of a mobile telephone system would typically contain more than 7 cells, however, for ease of reference, only 7 cells are shown in FIG. 1. Each cell 1-7 contains a base station including a transmitter, receiver and base station controller as are well known in the art. The base station transmitter/receiver is connected to an antenna tower 11-17 which is used to transmit signals to, and receive signals from, mobile telephones, within the mobile telephone system serving area. In FIG. 1 the base stations antenna towers 11-17 are selected to be located at the center of each of the cells 1-7, respectively and are equipped with Omni-directional antennas. However, in other configurations of a cellular radio system, the base station towers 11-17 may be located near the periphery, or otherwise away from the center of the cells 1-7 and may illuminate the cells 1-7 with radio signals either Omni-directionally or directionally. Therefore, the representation of the cellular radio system of FIG. 1 is for purposes of illustration only and is not intended as a limitation on the possible implementations of a mobile radio communications system within which a regulated area is defined for the purpose of controlling use of cellular phones therein. A regulated area 10 is located within cell 7, and a plurality of mobile units are used across the entire serving area within cells 1-7. Again, only one regulated area is shown in FIG. 1, but it should be understood that the actual number of regulated areas can be larger, in practice.

Each cell 1-7 has assigned to it a plurality of voice or speech channels for transmitting and receiving voice signals, and at least one access or control channel for transmitting control data signals, such as a forward control channel, and receiving control data signals from the mobile units, such as a reverse control channel.

As is known in the art, a cellular phone call can be established either by a subscriber who initiates a conversation (origination), or by a subscriber who receives a conversation (page). In each case, a control channel is used to begin a handshake routine opposite the local cellular base station, which provides service in a given area. A channel can be defined as a specific frequency (as in AMPS), frequency and time-slot (as in TDMA) or a spreading code channel (as in CDMA). Typically, after the handshake process is completed over the control channel, the cellular system allocates a voice channel wherein a further testing is made before the actual conversation begins. Once both forward (base station transmit) and reverse (mobile unit transmit) control channels have been tested, the call is commenced.

Referring to FIG. 2, a regulated area 21 containing at least one cellular mobile unit 22, which communicates with a nearby cellular base station 23. Any communication is initiated over the control channel, in which the base station 23 transmits on the forward control channel 24 and the mobile unit 22 transmits on the reverse control channel 25. A jammer unit 26 is typically located within the regulated area 21 so as to take advantage of the -10 dB (approx.) isolation normally provided by walls surrounding the regulated area. The jammer unit typically transmits a uniform density noise signal at the forward control channel frequency range. It should be understood that various types of noise signals may be used and the exact implementation shall vary according to the cellular standard modulation technique. Preferably, the noise signal level is sufficiently high to raise the noise floor and to capture the demodulator of the mobile units located within the regulated area. However, the noise signal may propagate outside the regulated area and cause interference with cellular subscribers for whom the regulation should not apply. Therefore, the exact level of noise transmitted within the regulated area is a tradeoff involving the forward control channel RF level received within the regulated area, and the isolation provided by the of the regulated area. In various implementations, a jammer unit 27 can be located outside the regulated area 21 whereby using a directional antenna the interfering signal propagation is directed into the regulated area.

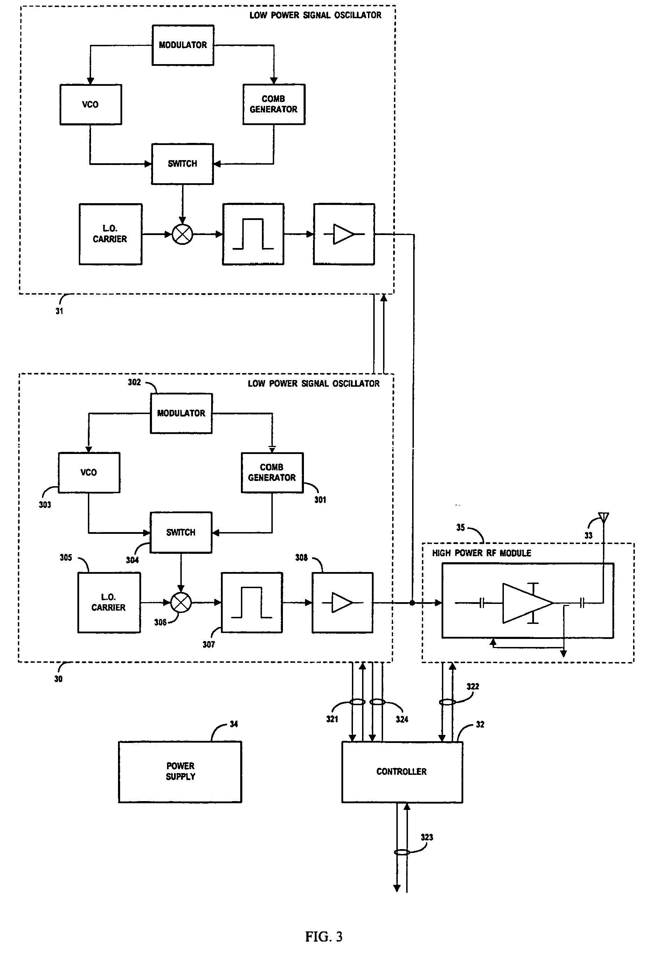

Referring now to FIG. 3, there is shown a block diagram of an electronic jammer device for preventing cellular phone calls in a given regulated area. Jammer device provides a shaped signal in the spectral frequency range of the relevant control signal frequencies of the cellular system. The blocking signal matches the range of control frequencies, and the chosen method of blocking system operation. Jammer device comprises a low-power signal oscillator 30, for generating a blocking signal, and a high-power RF module 35 for transmitting the blocking signal on the RF frequencies desired, via an antenna 33, which is matched to the proper frequency range. A controller 32 controls the modules described above, provides indicator signals and receives remote commands. Specifically, controller 32 controls the operation of the signal oscillator 30 and the transmitter 35, respectively, via control signals 321-322. Controller 32 receives external handshake signals 323 and provides indicator signals 323 for external use. A power supply 34 supplies circuit power. Signal oscillator 30 comprises a modulator 302, a voltage controlled oscillator (VCO) 303, a signal frequency comb oscillator 301 or noise oscillator, a switch 304, a mixer 306, a local oscillator 305, a bandpass filter 307 and an output amplifier 308. As stated above, the chosen method of blocking the cellular system operation determines the operation of jamming device. For example, if a continuous blocking signal on a single control frequency is chosen, modulator 302 is inoperative and VCO 303 generates a coherent signal (within the VCO limitations), which matches the bandwidth of a single control frequency. This signal is forwarded via switch 304 to mixer 306, where it is multiplied by the local oscillator in multiplier 305, to raise it to the required frequency. Signal filter 307 removes unwanted frequencies from the mixer 306 output, and a signal at the chosen blocking frequency is received. Output amplifier 308 amplifies the blocking signal before it is fed to transmitter 35. The blocking signal interferes with the control frequency, to prevent cellular calls. Another method of blocking cellular system operation is to operate jamming device such that a modulated noise signal is produced. In this approach, modulator 302 operates to feed VCO 303 which produces a modulated noise signal.

There are two types of noise signals available in this approach: 1) Analog noise - modulator 302 can be implemented by an electronic component which emits white noise, such as a noisy diode or noisy resistance. The signal is fed to and amplified by amplifier stages (transistors/operational amplifiers), producing a signal which is amplitude-modulated by the noise. The overall interfering signal bandwidth is sufficient to block all control signal channels bandwidth. 2) Digital noise - modulator 302 is implemented as an electronic component which generates pseudo random bits.

An additional method of blocking cellular system operation is to operate jamming device so as to produce a continuous blocking signal on all of the control frequencies of the cellular system. In this method, switch 304 selects the signal frequency comb oscillator 301 output, as a wide bandwidth oscillator, covering all of the control frequency spectrum per cellular standard implementation in said territory.

In another additional method of blocking cellular system operation, jamming device is operated to produce a continuous blocking signal on a selected group of control frequencies. In this case, switch 304 selects the signal frequency comb oscillator 301 output, as a sweep of frequencies. This signal is assembled from multiple predetermined frequencies in simultaneous fashion. A set of frequencies intended for blocking is chosen from all the possible frequencies of the blocked system.

Still another additional method of blocking cellular system operation involves operating jamming device as in the previous methods, with modulator 302 applying modulation to the blocking technique. The blocking signal generated by signal oscillator 30 feeds the input to transmitter 35, which amplifies it and broadcasts it to the atmosphere by antenna 33. Transmitter 35 is based on a linear amplification module operating in the RF range of the cellular frequencies, enabling control of the transmitter power output. The antenna 33 must be matched to the area to be blocked and the location as required. For example, blocking in a single room can be achieved by a printed circuit antenna installed within the jammer device board. In order to achieve accurate coverage, use of sector antennas, phased array antennas or any other means of directional radiation of RF signals known in the art. In the case of a long corridor, the blocking could be achieved by use of a leaky coax cable for the antenna 33, etc. In the previously described embodiments, the set of frequencies intended for blocking is chosen from all the possible frequencies of the system, and these control frequencies are generally known in accordance with the cellular standard.

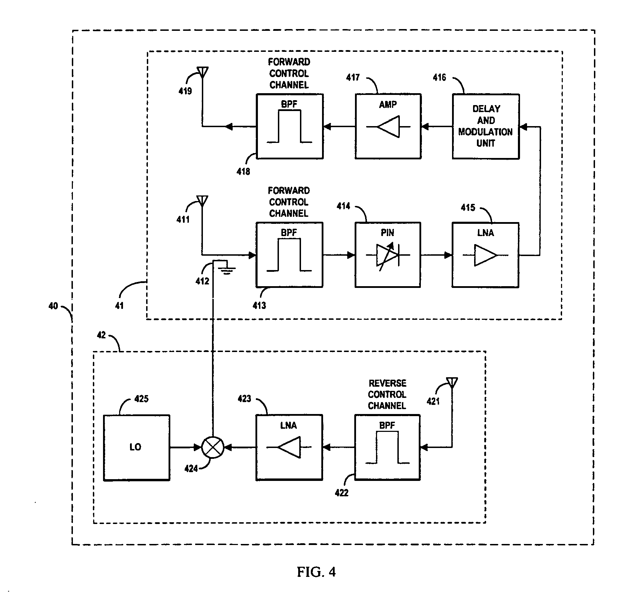

In another improved embodiment, illustrated in FIG. 4, there is an electronic device 40 featuring an alternative design in accordance with the principles of the present invention, for preventing cellular phone calls in a given regulated area. A reverse control frequency of the mobile unit is detected during a handshake attempt and a frequency mixing technique is used to generate the matching duplex forward control frequency at which the cellular base station transmits. The generated duplex signal induces open loop oscillations which interfere with the decoding procedure and introduces phase noise. As shown, device 40 comprises a combined receiver/transmitter, with receiver portion 42 comprising an antenna 421, filter 422, pre-amplifier 423, and frequency mixer 424, which is fed with a frequency signal from a local oscillator 425. The pre-amplifier 423 may be configured with a threshold level responsive to a typical reverse control channel transmitted by a mobile unit located within the regulated area. This is to ensure that reverse control channel signals originating outside the regulated area do not trigger any interfering response. The frequency generated by local oscillator 425 is predetermined to be at the exact frequency deviation between the duplex frequencies of the reverse control channel (RCC) and forward control channel (FCC). For example, as per TDMA Standard IS-136, the frequency deviation between RCC and FCC frequencies should be 45.000 MHz. Thus, the output of mixer 424 consists of four different frequencies, one of them being the exact FCC frequency matching the duplex RCC frequency initially received by antenna 421. The mixer 424 output is coupled via a coupler 412 to the transmitter portion 41 of device 40. Transmitter portion 41 comprises a bandpass filter 413 which passes only the FCC frequency to a pre-amplifier 415, via a threshold circuit 414. The output is then fed to a delay and modulation unit 416, after which an amplifier 417 feeds the output to a bandpass filter 418, with its output signal being broadcast via matched antenna 419. The broadcast signal is received by another antenna 411, which is matched to the FCC f. If the loop gain, i.e., the gain applied to the FCC signal received through antenna 411, until it is re-broadcast on antenna 419, is equal to or greater than the isolation between the antennas 411-419, then an unstable oscillation is developed, at the FCC frequency, due to positive feedback. This interferes with decoding and introduces phase noise in the cellular mobile unit, causing the handshake routine to malfunction, thereby disabling cellular system operation.

Using the embodiment of FIG. 4, another method of blocking cellular system operation is by operating local oscillator 425 so as to modulate the received FCC signal with 15 KHz, for example. This causes the broadcast of an amplified, modulated signal at the same FCC frequency, however, containing a component of phase noise which interferes with decoding in the cellular mobile unit.

Most geographical areas may be covered by several cellular systems. In locations covered by several systems, the control channels transmitted by the different base stations are received by the mobile units at different power levels. A jamming device transmitting at an equal power level on all control frequencies used by cellular systems, without the capability to differentiate between control channels received at different power levels, will result in inaccurate coverage. A cellular system with base station closer to the regulated location may be received at a higher level than control channels received from another base station of a different system. Similarly a base station transmitting at a high power level will be typically received at a higher signal strength, and higher transmission power will be required in order to jam it.

It is therefore important to enable calibration of the output power in a plurality of frequency bands with reference to the signal strength received from base stations transmitting on each band.
The jammer device of FIG. 3 incorporates two channels, each including a separate gain control circuit. Said gain control circuit can be calibrated, either manually by means of trimmer devices, or automatically by means of reference signals responsive to signal strength measurements taken by power sensing devices within and outside the regulated area.
FIG. 3 illustrates two low power signal oscillators 30 and 31, each tuned to a different frequency band, and calibrated to generate a different output power level so as to enable separate coverage to three frequency bands.

It is an objective of the present invention is to provide a reliable method and system for accurate coverage of a given area. In many cases, the isolation between the regulated area and areas surrounding it may be insufficient. Such conditions may also arise due to variations in the output power radiated from cellular base stations nearby the regulated area. In principle a jamming device may be installed and calibrated with reference to the environmental conditions at the time of installation. However, in the event that sometime after installation, a nearby cellular base station increases or decreases its average output power or antenna gain, the jamming signal may become under or over-powered. A dynamic calibration and control device is configured to sample the environmental control channel signal power, as required - continuously, at regular periodic intervals or each time the jamming device is activated. Such measurements can be taken from several points within or outside the regulated area. A closed loop feedback system may be configured to increase the accuracy of interfering signal coverage. Accordingly, feedback signals from a plurality of measurement points may serve to control the output power and/or radiation pattern of a directional antenna (e.g., phased array).

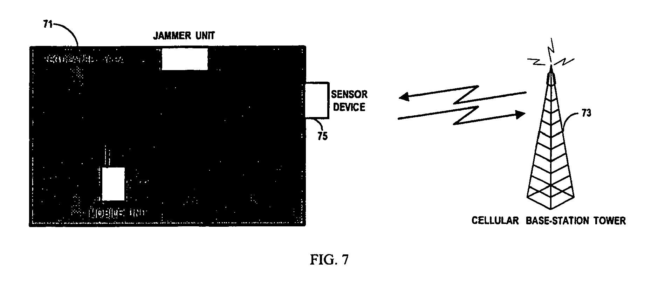

Referring now to FIG. 7, a jammer unit 74 is installed within regulated area 71 and transmits an interfering signal, which block cellular communications with mobile unit 72 located within the regulated area 71. Sensor device 75 is located outside the regulated area and is tuned to at least one control channel transmitted from a cellular base station. Said sensor comprises receiver and decoder devices having characteristics similar to mobile unit 72. While jammer unit 74 transmits an interfering signal, sensor device 75 performs a decoding function of said control channel and determines whether the interfering signal transmitted by jammer unit 74 blocks cellular communications outside said regulated area 71. Sensor device 75 is connected to jammer unit 74 and transfers a feedback signal responsive to sensor's ability to decode said control channel. Additional sensors similar to sensor device 75 are installed inside the regulated area. Jammer unit 74 uses said feedback signal to transmit an interfering signal with output power and beam which although blocks all cellular communications within regulated area 71, still enables cellular communications outside the regulated area.

In another embodiment a RSSI sensor device is located within the regulated area, jammer unit pauses noise transmission for a short interval (e.g., 3 mSec) and measures the signal strength received from cellular base stations so as to provide a reference for any modifications required for noise transmission output power.

A further improvement over the device of FIG. 3 is the ability to perform real-time screening of incoming and outgoing calls in accordance with a predetermined filtering scheme. Various applications require a blocking device to discriminate between different subscribers. Such is the case in security oriented environments where certain officers are competent to conduct cellular telephone conversations. The following embodiment enables active bi-directional call screening of all cellular communications taking place within a given area.

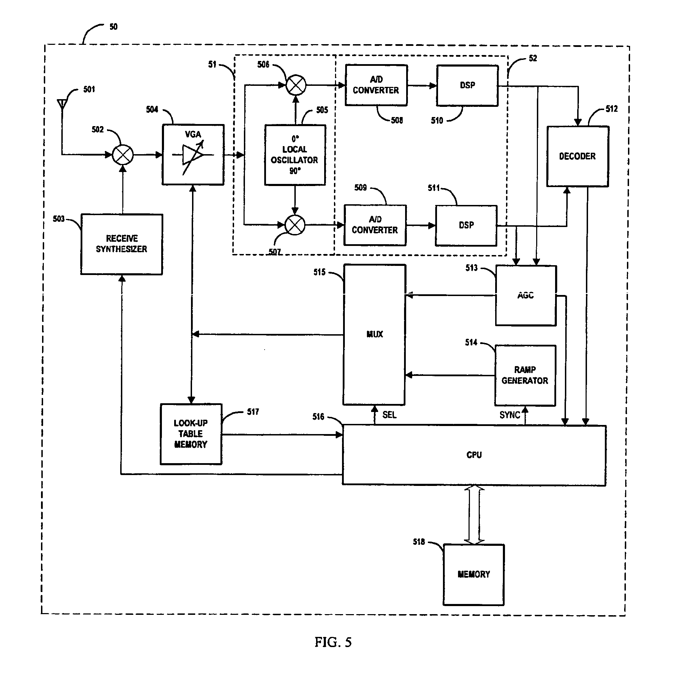

FIG. 5 illustrates an electronic calibration and control device 50 that scans control channel frequencies and provides received signal strength indication (RSSI) per each control channel received at a given location. A method for generating RSSI is disclosed in U.S. Patent No. 5,142,695 issued on Aug. 25, 1992 to Roberts et al for "CELLULAR RADIO-TELEPHONE RECEIVER EMPLOYING IMPROVED TECHNIQUE FOR GENERATING AN INDICATION OF RECEIVED SIGNAL STRENGTH". It should be understood that the present invention is not limited to any particular RSSI measurement technique.
Device 50 recovers a digital control channel from a digitally encoded, quadrature-modulated RF signal received at antenna 501. The front-end mixer 502 mixes the received signal with a locally generated signal from a frequency synthesizer 503 for tuning to a plurality of control channels within a predefined frequency range, as set out in the cellular standard involved. The output of the front-end mixer 502 is a signal having a selected frequency spectrum centered on a selected intermediate frequency. The frequency of the locally generated signal is determined by a control signal sent from the CPU 516 to the receive synthesizer 503. The VGA 504 amplifies the output of the front-end mixer 502 with a gain controlled by a VGA control signal received from MUX 515. A demodulation and signal processing circuit 52 is preceded by a frequency converting circuit 51 having a local oscillator 505 and a pair of mixers 506-507. Each of the mixers 506-507 combines the amplified signal from the VGA 504 with one of two orthogonally related baseband signals generated by local oscillator 505. The analog baseband signals are applied to separate "I" and "Q" circuit paths for conversion into digital baseband signals by A/D converters 508-509 and processing by DSPs 510-511, respectively. The DSPs 510-511 perform baseband match filter functions and demodulate the digital signals from the A/D converters 508-509, thereby generating demodulated digital baseband signals. The decoder 512 recovers the data by reversing the signal encoding algorithm used by the base station (e.g., QPSK). The recovered control channel data is transferred to the CPU 516. The demodulated digital baseband signals from DSPs 510-511 are also fed into automatic gain control circuit (AGC) 513, combined and converted into an AGC signal responsive to the amplitudes of the signal envelope, and therefore the received signal. The ramp generator 514 generates a ramp signal, i.e., a signal having a generally increasing amplitude over a preselected period of time (e.g., a digital counter). In response to a select signal SEL from CPU 516, digital multiplexer (MUX) 515 passes either AGC signal or the ramp signal to the VGA 504 as the VGA control signal. The CPU 516 also controls the start and termination of the ramp signal by means of a timing signal SYNC applied to the ramp generator 514. In addition to providing the control signal to the VGA 504, the MUX 515 applies the control signal to the look-up table memory 517, which stores a plurality of potential RSSI values, each corresponding to a VGA control value. CPU 516 stores a list of control channel frequencies, each with its measured signal strength in memory device 518.

In order to cope with several control channel frequencies, each having a different signal strength, a frequency hopping transmitter is configured to scan all control channel frequencies detected by device 50 and transmit an interfering signal according to its RSSI value.

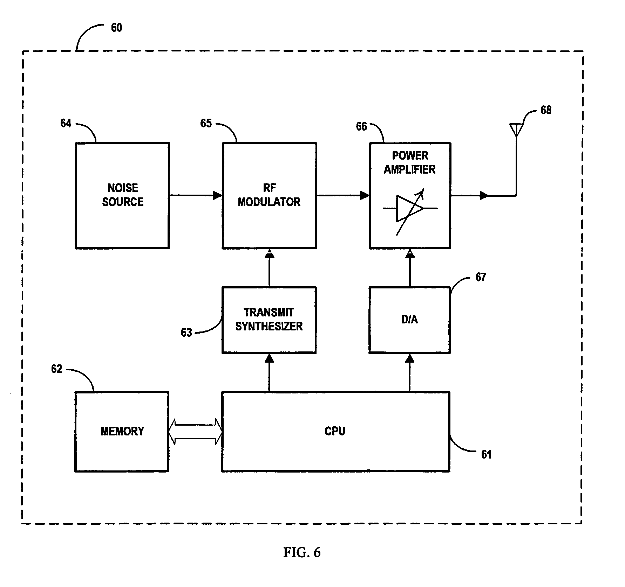

FIG. 6 illustrates a frequency hopping transmitter device 60 that is controlled by microprocessor (CPU) device 61 having memory device 62. It should be understood that CPU 61 and memory device 62 can be common to those implemented in device 50 (see FIG. 5 devices 516, 518). The transmitting frequency synthesizer 63 generates the transmitter carrier frequency in accordance with commands from the CPU 61. To implement frequency hopping, the CPU 61 reads hopping information stored in memory device 62 and then sends timed instructions to the transmitter frequency synthesizer 63 to generate a sequence of carrier frequencies in accordance with a frequency hopping scheme based on the set of control channel frequencies and levels detected and measured by device 50, or any similar measurement facility, and recorded in memory device 62. A noise signal from noise source 63 is connected to RF modulator 64, which modulates the carrier frequency from the transmitting frequency synthesizer 63 according to the modulation method most suitable for blocking a particular cellular standard. For example, one suitable modulation for TDMA cellular systems based on EIA/TIA IS-54 is quadrature phase shift keying (QPSK). The power amplifier 66 amplifies the signals from RF modulator 64. The RF power emission level is selected on command by the CPU 61 via D/A converter 67 in accordance with RSSI levels measured for each control channel and recorded in memory device 62. When used in conjunction with device 50, the output power of transmitter unit 60 is considerably lower than a wide band jamming device such as the device illustrated in FIG. 3. This is especially significant in cellular systems such as GSM or D-AMPS (TDMA) IS-136, where control channel frequencies may be located over a wide frequency range.

In another improved embodiment, one control channel frequency is temporarily removed from the frequency hopping scheme stored in memory device 62. Device 50 is tuned to decode reverse control channel messages transmitted by all mobile units located within a given regulated area over the duplex channel of the control channel removed. Memory device 62 holds a database of authorized mobile subscribers, for whom call establishment is allowed. Whenever a control channel message indicating call establishment handshake is decoded for unauthorized subscribers, said forward control channel frequency is re-added to the hopping scheme for a period of time sufficient to prevent the handshake between the unauthorized subscriber and the cellular base station. Thereafter, said control channel is removed from the hop-set so as to enable authorized subscribers to communicate with the cellular system over said control channel.

In yet another embodiment, the noise source 64 is replaced with a signaling generator controlled by CPU 61. The latter instructs the signaling generator to transmit phantom base station signaling causing mobile units within a given regulated area to function as if they are registered with a local base station. The base station signaling transmission causes mobile phones to refrain from seeking other control channels. Base station signaling is intentionally controlled not correspond to mobile identification numbers (MIN) which have been defined in the memory device 62 as authorized to conduct communications within the regulated area. Said authorized portable units are rejected by the clone base station, and do not receive base station signaling required in order to complete registration with the clone base station. Thus said authorirzed portable units seek other control channels on which registration can be completed. Since control channels are not affected by said phantom signaling, authorized users can freely communicate with any other available cellular base station in the vicinity of the regulated area.

A significant drawback of the embodiments disclosed herein, which are based on transmission of a continuous (CW) noise signal, is the increase of noise outside the regulated area during operation that might degrade the overall performance of the cellular network by interfering with weak signals transmitted by distant base stations. Furthermore, as various handsets have different receiver sensitivity figures, within specified limits, in extreme conditions, such as those imposed by noise jamming, some subscribers might be influenced by the interference more than others. Moreover, as modem life habits involve increasing exposure to various radiation sources more and more individuals express their concern and prefer not to subject themselves to unnecessary continuous radiation. Accordingly, the following embodiment does not radiate any interfering signal as long as the mobile units within the regulated area are in stand-by mode. Interfering transmission is applied only during the handshake process associated with call establishment.

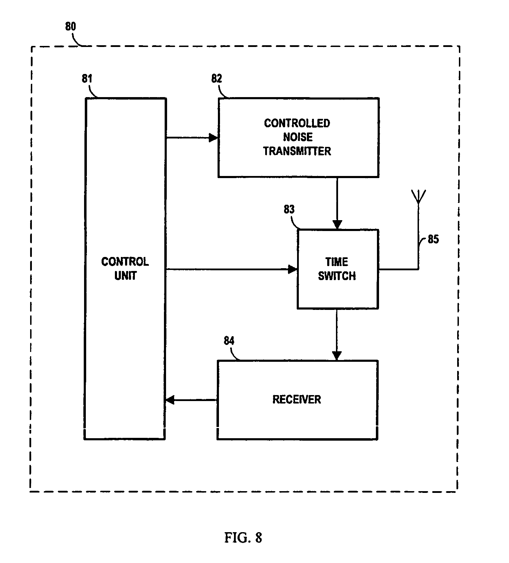

Referring now to FIG. 8, a jamming device 80 consists of control unit 81, controlled noise transmitter 82, receiver 84, time switch 83 and antenna 85. Receiver 84 includes a RF power detector which is configured to sense RF radiation emitted from mobile units on the reverse control/voice channel frequency band. When a signal is detected by receiver 84 at a minimum predetermined power level, control unit 81 commands the controlled noise transmitter 82 to respond with a noise transmission over the entire bandwidth transmitted from the base station, or any relevant part thereof, for a predetermined period of time. A time switch 83 enables both transmitter 82 and receiver 84 to use the same antenna for transmission and reception as determined by control unit 81. The control unit 81 typically comprises a microprocessor and memory device. The control unit 81 implements the logic by which noise transmission is activated. The controller is configured with various parameters for customizing the jamming device 80 for a given operation environment. In a typical implementation, control unit 81 has a plurality of received frequency bands covered by receiver 84. For each detected transmission in one of said frequency bands, the control unit 81 commands the noise transmitter 82 to generate a responsive interfering signal on the matching channel transmitted by the base station.

For example if the receiver 84 detects a transmission from an AMPS standard mobile unit, handshake between the mobile unit and the base station is prevented by transmission of a RF signal at the duplex transmit frequency, or by jamming the entire transmit frequency range as expected in a AMPS. system, according to AMPS standards. Similarly, when the receiver 84 detects aRF transmission from a TDMA mobile unit, the device transmits a signal on the base station transmit frequency expected in a TDMA system. It should be understood that when responding over a wide band, more output power is required. However, the tradeoff of responding over a narrow band involves more processing power required for detection of the exact frequency where the interfering signal is likely to have the desired effect over the communications between the mobile unit and the base station.

The controlled noise transmitter 82 may also be calibrated to respond to the RF signal detected with a jamming signal on the entire control and voice communication bandwidth, thereby disabling communications even if the call has already been established.

In an improved embodiment a decoding device monitors the identification signals transmitted by the mobile unit (e.g. MIN / ESN) and compares them with a database held in a memory device prior to initiation of the noise signal transmission by the controlled noise transmitter 82. Thus the device 80 is capable of selectively disabling and enabling communications with predetermined telephone subscribers, effectively providing a cellular communication firewall.

In a CDMA cellular telephone system such as is described in U.S. Pat. No. 4,901,307, issued Feb. 13, 1990, entitled "SPREAD SPECTRUM MULTIPLE ACCESS COMMUNICATION SYSTEM USING SATELLITE OR TERRESTRIAL REPEATERS", assigned to Qualcomm Inc., channel specific pseudonoise (PN) sequences are used instead of frequencies, such as in FDMA or frequency + time-slot as in TDMA. In order to interfere with base station transmitted paging and/or control channels, a jamming device is configured to transmit noise signals modulated and spread by PN sequences used by the cellular system in a given area.

Having described the invention with regard to certain specific embodiments, it is to be understood that the description is not meant as a limitation, since further modifications may now become apparent to those skilled in the art, and it is intended to cover such modifications as fall within the scope of the appended claims.

## Claims

1. A method for regulating cellular communications with a plurality of mobile units located within a given regulated area (21) in a cellular communication system, **characterised by** the steps of
defining at least one channel (24) used for transmission by at least one mobile unit;
receiving, by a receiver of a jammer unit, a signal transmitted by said at least one mobile unit, on said at least one channel (24); and
responding, by the jammer unit, to the received signal with a response blocking transmission, on at least one forward channel (25) used for transmission by at least one cellular base stations (23), for a predetermined duration.

2. The method of claim 1, wherein receiving the signal transmitted by the at least one mobile unit comprises decoding the signal transmitted by said at least one mobile unit.

3. The method of claim 1, wherein receiving the signal transmitted by the at least one mobile unit comprises detecting the signal transmitted by the at least one mobile unit.

4. The method of any of claims 1-3, wherein at least one characteristic of said response transmission is responsive to at least one characteristic of said received signal.

5. The method of any of claims 1-4, wherein said response transmission is generated for a duration responsive to said received signal.

6. The method of any of claims 1-5, wherein said response transmission is generated at a transmission power responsive to said received signal.

7. The method of any of claims 1-6, wherein said response transmission includes a phantom base station signal responsive to said received signal.

8. The method of any of the preceding claims, wherein said response transmission comprises noise generated over an entire frequency bandwidth allocated for base station transmission.

9. The method of any of the preceding claims, wherein said response transmission comprises noise generated over channels allocated for base station transmission, in the regulated area (21).

10. The method of any of claims 1-9, wherein said response transmission comprises noise generated over a narrow frequency band, which band is determined responsive to said received signal.

11. The method of any of claims 1-10, wherein said response transmission comprises noise generated over a forward channel matching a reverse channel on which the received signal was received.

12. A method according to any of claims 1-11, wherein said at least one forward channel (25) comprises a single forward channel.

13. A method according to any of claims 1-11, wherein responding to the received signal comprises responding with a response blocking transmission, on a plurality of forward channels.

14. A method according to any of claims 1-13, wherein said at least one forward channel (25) comprises at least one control channel.

15. The method of any of claims 1-14, wherein said response transmission is transmitted by a frequency hopping transmitter.

16. A method according to any of claims 1-15, wherein the transmission power of said blocking transmission is a function of signal strength of a signal received from a base station (23), within said area (21).

17. A method according to any of claims 1-16, wherein the transmission power of said blocking transmission is a function of a signal strength of a signal received from a base station outside said area (21).

18. A method according to any of claims 1-17, comprising authorizing at least one portable cellular telephone for cellular communication within said area (21), wherein said blocking transmission is transmitted only responsive to transmissions originating from portable cellular telephones not authorized for transmission within the area (21).

19. A method according to any of claims 1-18, wherein said blocking transmission is transmitted on a plurality of channels at a plurality of power levels, each power level responsive to a cellular system characteristic.

20. A method according to any of claims 1-19, wherein said blocking transmission is generated from within said given area (21).

21. A method according to any of claims 1-20, wherein said blocking transmission is generated from outside said given area (21).

22. A method according to any of claims 1-21, wherein the blocking transmission comprises a retransmission of at least one base station signal.

23. A method according to any of claims 1-22, wherein the blocking transmission comprises pseudo noise sequences used by the cellular system.

24. A method according to any of claims 1-23, wherein the response transmission is generated by mixing the received signal with a locally generated signal.

25. A method according to claim 24, wherein the locally generated signal represents a deviation between duplex forward and reverse channels.

26. A device (26) for regulation of cellular telephone calls in a cellular communication system within a given area (21), said device being **characterised by**
means (418) for defining at least one forward control channel (25) existing within the area (21) for establishing cellular telephone calls;
a receiver (42) for receiving signals from mobile units; and
means (41) for generating, for a predetermined duration, a signal which interferes with signals at said control channel (25) by preventing decoding of signals and commands carried by said control channel (25), in response to signals received from a mobile unit by the receiver (42).

27. The device of claim 26, wherein said at least one control channel (25) comprises a single channel.

28. The device of claim 26 or claim 27, wherein the means for generating the signal which interferes comprises means (41) for generating a signal which interferes with a plurality of control channels.

29. The device of any of claims 26-28, wherein said control channel (25) comprises a set of control channels selected from a plurality of relevant control channels.

30. The device of any of claims 26-29, wherein said means for generating comprises a mixer (502) for mixing said received signals with a frequency representing a deviation between duplex forward and reverse control channel frequencies,

31. The device of any of claim 26-30, wherein said means for generating comprises a mixer (502) for mixing a frequency of said control channel with a predetermined frequency to develop a phase modulated signal.

32. The device of any of claims 26-31, wherein the transmission power of said interfering signal is a function of signal strength of a signal received from a base station (23) within said area (21) .

33. The device of any of claims 26-32, wherein said generated signal comprises noise generated over an entire frequency bandwidth allocated for base station transmission in said area (21).

34. The device of any of claims 26-33, wherein said generated signal comprises noise generated over a narrow frequency band, which band is determined responsive to said received signal.

35. The device of any of claims 26-34, wherein the means (41) for generating the signal generates an interference signal responsive to an identification of a cellular telephone as not being a telephone approved for cellular communications within said area (21).

36. The device of any of claims 26-35, wherein said generated signal includes a phantom base station signal.

## Patentansprüche

1. Verfahren zur Regulierung zellularer Kommunikationen mit einer Vielzahl mobiler Einheiten, die in einem vorgegeben regulierten Gebiet (21) in einem zellularen Kommunikationssystem angeordnet sind,
**gekennzeichnet durch** die Schritte
- Definition wenigstens eines von wenigstens einer mobilen Einheit zur Übertragung verwendeten Kanals (24);
- Empfang eines von der wenigstens einen mobilen Einheit auf dem wenigstens einem Kanal (24) übertragenen Signals **durch** den Empfänger einer Störsender-Baugruppe; und
- Antworten der Störsender-Baugruppe auf das empfangene Signal mit einer sperrenden Antwort-Übertragung auf dem wenigstens einen von wenigstens einer zellularen Basisstation (23) zur Übertragung verwendeten Sendekanal (25) für einen vorbestimmten Zeitraum.

2. Verfahren nach Anspruch 1,
wobei der Empfang des von der wenigstens einen mobilen Einheit übertragenen Signals die Dekodierung des von der wenigstens einen mobilen Einheit übertragenen Signals umfasst.

3. Verfahren nach Anspruch 1,
wobei der Empfang des von der wenigstens einen mobilen Einheit übertragenen Signals die Erfassung des von der wenigstens einen mobilen Einheit übertragenen Signals umfasst.

4. Verfahren nach einem der Ansprüche 1 bis 3,
wobei wenigstens ein Merkmal der Antwort-Übertragung von wenigstens einem Merkmal des empfangenen Signals abhängt.

5. Verfahren nach einem der Ansprüche 1 bis 4,
wobei die Antwort-Übertragung für eine Zeitdauer erzeugt wird, die von dem empfangenen Signal abhängt.

6. Verfahren nach einem der Ansprüche 1 bis 5,
wobei die Antwort-Übertragung mit einer Übertragungsleistung erzeugt wird, die von dem empfangenen Signal abhängt.

7. Verfahren nach einem der Ansprüche 1 bis 6,
wobei die Antwort-Übertragung ein Pseudo-Basisstationssignal umfasst, das von dem empfangenen Signal abhängt.

8. Verfahren nach einem der vorhergehenden Ansprüche,
wobei die Antwort-Übertragung ein Rauschen umfasst, das über eine gesamte Frequenzbandbreite erzeugt wird, die für die Übertragung der Basisstation bereitgestellt wird.

9. Verfahren nach einem der vorhergehenden Ansprüche,
wobei die Antwort-Übertragung ein Rauschen umfasst, das über Kanäle erzeugt wird, die für Übertragungen der Basisstation in dem regulierten Gebiet (21) bereitgestellt werden.

10. Verfahren nach einem der Ansprüche 1 bis 9,
wobei die Antwort-Übertragung ein Rauschen umfasst, das über ein schmales Frequenzband erzeugt wird, wobei das Band in Abhängigkeit von dem empfangenen Signal festgelegt wird.

11. Verfahren nach einem der Ansprüche 1 bis 10,
wobei die Antwort-Übertragung ein Rauschen umfasst, das über einen Sendekanal erzeugt wird, der einem Rücklaufkanal entspricht, auf dem das empfangene Signal empfangen wurde.

12. Verfahren nach einem der Ansprüche 1 bis 11,
wobei der wenigstens eine Sendekanal (25) einen einzigen Sendekanal umfasst.

13. Verfahren nach einem der Ansprüche 1 bis 11,
wobei das Antworten auf das empfangene Signal das Antworten mit einer sperrenden Antwort-Übertragung auf mehreren Sendekanälen umfasst.

14. Verfahren nach einem der Ansprüche 1 bis 13,
wobei der wenigstens eine Sendekanal (25) wenigstens einen Steuerkanal umfasst.

15. Verfahren nach einem der Ansprüche 1 bis 14,
wobei die Antwort-Übertragung durch einen Frequenz-springenden Sender übertragen wird.

16. Verfahren nach einem der Ansprüche 1 bis 15,
wobei die Übertragungsleistung der sperrenden Übertragung eine Funktion einer Signalstärke eines von einer Basisstation (23) in dem Gebiet (21) empfangenen Signals ist.

17. Verfahren nach einem der Ansprüche 1 bis 16,
wobei die Übertragungsleistung der sperrenden Übertragung eine Funktion einer Signalstärke eines von einer Basisstation außerhalb des Gebiets (21) empfangenen Signals ist.

18. Verfahren nach einem der Ansprüche 1 bis 17,
umfassend die Freigabe wenigstens eines tragbaren Mobiltelefons zur zellularen Kommunikation in dem Gebiet (21), wobei die sperrende Übertragung nur in Abhängigkeit von Übertragungen übertragen wird, die von tragbaren Mobiltelefonen ausgehen, die nicht zur Übertragung in dem Gebiet (21) freigegeben sind.

19. Verfahren nach einem der Ansprüche 1 bis 18,
wobei die sperrende Übertragung auf mehreren Kanälen in mehreren Leistungsstufen übertragen wird, wobei jede Leistungsstufe von einem Merkmal des zellularen Systems abhängt.

20. Verfahren nach einem der Ansprüche 1 bis 19,
wobei die sperrende Übertragung von innerhalb des vorgegebenen Gebiets (21) erzeugt wird.

21. Verfahren nach einem der Ansprüche 1 bis 20,
wobei die sperrende Übertragung von außerhalb des vorgegebenen Gebiets (21) erzeugt wird.

22. Verfahren nach einem der Ansprüche 1 bis 21,
wobei die sperrende Übertragung eine Relaisübertragung wenigstens eines Basisstationssignals umfasst.

23. Verfahren nach einem der Ansprüche 1 bis 22,
wobei die sperrende Übertragung von dem zellularen System verwendete Sequenzen eines Pseudozufallsrauschens umfasst.

24. Verfahren nach einem der Ansprüche 1 bis 23,
wobei die Antwort-Übertragung durch Mischen des empfangenen Signals mit einem lokal erzeugten Signal erzeugt wird.

25. Verfahren nach einem der Ansprüche 1 bis 24,
wobei das lokal erzeugte Signal eine Abweichung zwischen Duplex-Sende- und Rücklaufkanälen darstellt.

26. Vorrichtung (26) zur Regulierung von Mobiltelefonanrufen in einem zellularen Kommunikationssystem innerhalb eines vorgegeben Gebiets (21)
wobei die Vorrichtung **gekennzeichnet ist durch**
- Mittel (418) zur Definition wenigstens eines in dem Gebiet (21) bestehenden Sende-Steuerkanals (25) zum Aufbau von Mobiltelefonanrufen;
- einen Empfänger (42) zum Empfang von Signalen mobiler Einheiten;
- Mittel (41) zur Erzeugung eines Signals für einen vorbestimmten Zeitraum, das mit Signalen auf dem Steuerkanal (25) interferiert, um eine Decodierung von Signalen und Befehlen, die auf dem Steuerkanal (25) übertragen werden, in Abhängigkeit von **durch** den Empfänger (42) empfangenen Signalen von einer mobilen Einheit zu verhindern.

27. Vorrichtung nach Anspruch 26,
wobei der wenigstens eine Steuerkanal (25) einen einzigen Kanal umfasst.

28. Vorrichtung nach Anspruch 26 oder 27,
wobei die Mittel zur Erzeugung des interferierenden Signals Mittel (41) zur Erzeugung eines Signals umfasst, das mit einer Vielzahl von Steuerkanälen interferiert.

29. Vorrichtung nach einem der Ansprüche 26 bis 28,
wobei der Steuerkanal (25) einen Satz von Steuerkanälen umfasst, die aus einer Vielzahl von relevanten Steuerkanälen ausgewählt wurden.

30. Vorrichtung nach einem der Ansprüche 26 bis 29,
wobei die Mittel zur Erzeugung einen Mischer (502) umfassen, um die empfangenen Signale mit einer Frequenz zu mischen, die einer Abweichung zwischen den Frequenzen von Duplex-Sende- und Rücklauf-Steuerkanälen entspricht.

31. Vorrichtung nach einem der Ansprüche 26 bis 30,
wobei die Mittel zur Erzeugung einen Mischer (502) umfassen, um zur Ausbildung eines phasenmodulierten Signals eine Frequenz auf dem Steuerkanal mit einer vorbestimmten Frequenz zu mischen.

32. Vorrichtung nach einem der Ansprüche 26 bis 31,
wobei die Übertragungsleistung des interferierenden Signals eine Funktion der Signalstärke eines von einer Basisstation (23) in dem Gebiet (21) empfangenen Signals ist.

33. Vorrichtung nach einem der Ansprüche 26 bis 32,
wobei das erzeugte Signal ein Rauschen umfasst, das über eine gesamte Frequenzbandbreite erzeugt wird, das für eine Übertragung der Basisstation in dem Gebiet (21) bereitgestellt wird.

34. Vorrichtung nach einem der Ansprüche 26 bis 33,
wobei das erzeugte Signal ein Rauschen umfasst, das über ein schmales Frequenzband erzeugt wird, wobei das Band in Abhängigkeit von dem empfangenen Signal festgelegt wird.

35. Vorrichtung nach einem der Ansprüche 26 bis 34,
wobei das Mittel (41) zur Erzeugung des Signals in Abhängigkeit davon, dass ein Mobiltelefon als ein solches identifiziert wird, das nicht für zellulare Kommunikationen in dem Gebiet (21) freigegeben ist, ein Interferenzsignal erzeugt.

36. Vorrichtung nach einem der Ansprüche 26 bis 35,
wobei das erzeugte Signal ein Pseudo-Basisstationssignal umfasst.

## Revendications

1. Procédé de régulation de communications cellulaires avec une multiplicité d'unités mobiles situées à l'intérieur d'une zone régulée donnée (21) dans un système de communication cellulaire, **caractérisé par** les étapes de :
définition d'au moins un canal (24) utilisé pour la transmission par au moins une unité mobile ;
réception, grâce à un récepteur d'une unité de brouillage, d'un signal émis par ladite au moins une unité mobile, sur ledit au moins un canal (24) ; et
réponse, grâce à l'unité de brouilleur, au signal émis avec une émission de blocage de réponse, sur au moins un canal principal (25) utilisé pour l'émission par au moins une station de base cellulaire (23), pendant une durée prédéterminée.

2. Procédé selon la revendication 1, dans lequel la réception du signal émis par la au moins une unité mobile comprend le décodage du signal émis par ladite au moins une unité mobile.

3. Procédé selon la revendication 1, dans lequel la réception du signal émis par la au moins une unité mobile comprend la détection du signal émis par la au moins une unité mobile.

4. Procédé selon l'une quelconque des revendications 1 à 3, dans lequel au moins une caractéristique de ladite émission de réponse est en réponse à au moins une caractéristique dudit signal reçu.

5. Procédé selon l'une quelconque des revendications 1 à 4, dans lequel ladite émission de réponse est générée pendant une durée qui répond audit signal reçu.

6. Procédé selon l'une quelconque des revendications 1 à 5, dans lequel ladite émission de réponse est générée à une puissance qui répond audit signal reçu.

7. Procédé selon l'une quelconque des revendications 1 à 6, dans lequel ladite émission de réponse comprend un signal de station de base fantôme en réponse audit signal reçu.

8. Procédé selon l'une quelconque des revendications précédentes, dans lequel ladite émission de réponse comprend du bruit généré sur une largeur de bande de fréquence complète allouée à l'émission de station de base.

9. Procédé selon l'une quelconque des revendications précédentes, dans lequel ladite émission de réponse comprend du bruit généré sur des canaux alloués à l'émission de station de base, dans la zone régulée (21).

10. Procédé selon l'une quelconque des revendications 1 à 9, dans lequel ladite émission de réponse comprend du bruit généré sur une bande de fréquence étroite, laquelle bande est déterminée en réponse audit signal reçu.

11. Procédé selon l'une quelconque des revendications 1 à 10, dans lequel ladite émission de réponse comprend du bruit généré sur un canal principal correspondant à un canal inverse sur lequel le signal reçu a été reçu.

12. Procédé selon l'une quelconque des revendications 1 à 11, dans lequel ledit au moins un canal principal (25) comprend un unique canal principal.

13. Procédé selon l'une quelconque des revendications 1 à 11, dans lequel la réponse au signal reçu comprend la réponse avec une émission de blocage de réponse, sur une multiplicité de canaux principaux.

14. Procédé selon l'une quelconque des revendications 1 à 13, dans lequel ledit au moins un canal principal (25) comprend au moins un canal de commande.

15. Procédé selon l'une quelconque des revendications 1 à 14, dans lequel ladite émission de réponse est émise par un émetteur à saut de fréquence.

16. Procédé selon l'une quelconque des revendications 1 à 15, dans lequel la puissance d'émission de ladite émission de blocage est une fonction d'une intensité de signal d'un signal reçu d'une station de base (23), à l'intérieur de ladite zone (21).

17. Procédé selon l'une quelconque des revendications 1 à 16, dans lequel la puissance d'émission de ladite émission de blocage est une fonction d'une intensité de signal d'un signal reçu d'une station de base (23) à l'extérieur de ladite zone (21).

18. Procédé selon l'une quelconque des revendications 1 à 17, comportant le fait d'autoriser au moins un téléphone cellulaire portable pour une communication cellulaire à l'intérieur de ladite zone (21), ladite émission de blocage étant émise seulement en réponse à des émissions provenant de téléphones cellulaires portables non autorisés pour l'émission dans la zone (21).

19. Procédé selon l'une quelconque des revendications 1 à 18, dans lequel ladite émission de blocage est émise sur une multiplicité de canaux à une multiplicité de niveaux de puissance, chaque niveau de puissance répondant à une caractéristique de système cellulaire.

20. Procédé selon l'une quelconque des revendications 1 à 19, dans lequel ladite émission de blocage est générée de l'intérieur de ladite zone donnée (21).

21. Procédé selon l'une quelconque des revendications 1 à 20, dans lequel ladite émission de blocage est générée de l'extérieur de ladite zone donnée (21).

22. Procédé selon l'une quelconque des revendications 1 à 21, dans lequel l'émission de blocage comprend une réémission d'au moins un signal de station de base.

23. Procédé selon l'une quelconque des revendications 1 à 22, dans lequel l'émission de blocage comprend des séquences de pseudo-bruit utilisées par le système de cellulaire.

24. Procédé selon l'une quelconque des revendications 1 à 23, dans lequel l'émission de réponse est générée en mélangeant le signal reçu à un signal généré localement.

25. Procédé selon la revendication 24, dans lequel le signal généré localement représente un écart entre des canaux principal et inverse en duplex.

26. Dispositif (26) pour la régulation d'appels de téléphone cellulaire dans un système de communication cellulaire à l'intérieur d'une zone donnée (21), ledit dispositif étant **caractérisé par**
des moyens (418) destinés à définir au moins un canal de commande principal (25) existant à l'intérieur de la zone (21) afin d'établir des appels de téléphone cellulaire ;
un récepteur destiné à recevoir des signaux provenant d'unités mobiles ; et
des moyens (41) destinés à générer, pendant une durée prédéterminée, un signal qui interfère avec des signaux au niveau dudit canal de commande (25) en empêchant le décodage de signaux et de commandes transportés par ledit canal de commande (25), en réponse à des signaux reçus d'une unité mobile par le récepteur (42).

27. Dispositif selon la revendication 26, dans lequel ledit au moins un canal de commande (25) comprend un unique canal.

28. Dispositif selon la revendication 26 ou la revendication 27, dans lequel les moyens destinés à générer le signal qui interfère comprennent des moyens (41) destinés à générer un signal qui interfère avec une multiplicité de canaux de commande.

29. Dispositif selon l'une quelconque des revendications 26 à 28, dans lequel ledit canal de commande (25) comprend un ensemble de canaux de commande sélectionnés parmi une multiplicité de canaux de commande pertinents.

30. Dispositif selon l'une quelconque des revendications 26 à 29, dans lequel lesdits moyens de génération comprennent un mélangeur (502) destiné à mélanger lesdits signaux reçus avec une fréquence représentant un écart entre des fréquences de canal de commande principal et inverse en duplex.

31. Dispositif selon l'une quelconque des revendications 26 à 30, dans lequel lesdits moyens de génération comprennent un mélangeur (502) destiné à mélanger une fréquence dudit canal de commande avec une fréquence prédéterminée afin de développer un signal modulé en phase.

32. Dispositif selon l'une quelconque des revendications 26 à 31, dans lequel la puissance d'émission dudit signal qui interfère est une fonction d'une intensité de signal d'un signal reçu d'une station de base (23) à l'intérieur de ladite zone (21).

33. Dispositif selon l'une quelconque des revendications 26 à 32, dans lequel ledit signal généré comprend du bruit généré sur une largeur de bande de fréquence complète allouée à une émission de station de base dans ladite zone (21).

34. Dispositif selon l'une quelconque des revendications 26 à 33, dans lequel ledit signal généré comprend du bruit généré sur une bande de fréquence étroite, laquelle bande est déterminée en réponse audit signal reçu.

35. Dispositif selon l'une quelconque des revendications 26 à 34, dans lequel les moyens (41) de génération du signal génèrent un signal d'interférence en réponse à une identification d'un téléphone cellulaire comme n'étant pas un téléphone approuvé pour des communications cellulaires à l'intérieur de ladite zone (21).

36. Dispositif selon l'une quelconque des revendications 26 à 35, dans lequel ledit signal généré comprend un signal de station de base fantôme.
